# EUROPÄISCHE PATENTSCHRIFT

(11) **EP 2 892 663 B1**
(45) Veröffentlichungstag und Bekanntmachung des Hinweises auf die Patenterteilung: **09.11.2016**
(21) Anmeldenummer: 13759206.9
(22) Anmeldetag: 09.09.2013
(51) Int. Cl.: B21B 1/22, B21B 27/00, B23K 26/00, B23K 26/08

(54) **FLACHPRODUKT AUS METALLWERKSTOFF, INSBESONDERE EINEM STAHLWERKSTOFF, VERWENDUNG EINES SOLCHEN FLACHPRODUKTS SOWIE WALZE UND VERFAHREN ZUR HERSTELLUNG SOLCHER FLACHPRODUKTE**
FLAT PRODUCT MADE OF METAL MATERIAL, IN PARTICULAR A STEEL MATERIAL, USE OF SUCH A FLAT PRODUCT, AND ROLL AND METHOD FOR PRODUCING SUCH FLAT PRODUCTS
PRODUIT PLAT CONSTITUÉ D'UN MATÉRIAU MÉTALLIQUE, EN PARTICULIER D'UN MATÉRIAU ACIER, UTILISATION DUDIT PRODUIT PLAT, AINSI QUE CYLINDRE ET PROCÉDÉ DE FABRICATION DUDIT PRODUIT PLAT

(30) Priorität: 07.09.2012 DE 102012017703
(43) Veröffentlichungstag der Anmeldung: 15.07.2015
(73) Patentinhaber: Daetwyler Graphics AG, 3368 Bleienbach (CH); ThyssenKrupp Steel Europe AG, 47166 Duisburg (DE)
(72) Erfinder: KOPPLIN, Karl-Heinz, 45239 Essen (DE); KOCH, Martin, 47506 Neukirchen-Vluyn (DE); WISCHMANN, Stefan, 10437 Berlin (DE); MACHEREY, Friedhelm, 46519 Alpen (DE); SCHULZE-KRAASCH, Folkert, 47179 Duisburg (DE); WAHSER, Jörg, 47167 Duisburg (DE); HENNIG, Guido, CH-3368 Bleienbach (CH); RESING, Markus, 48691 Vreden (DE)
(74) Vertreter: Cohausz & Florack
(86) Internationale Anmeldenummer: PCT/EP2013/068542
(87) Internationale Veröffentlichungsnummer: WO 2014/037545

(56) Entgegenhaltungen:
- WO-A1-95/07775
- JP-A- H0 890 003
- JP-A- S6 350 488
- JP-A- 2000 176 513
- US-A- 4 806 731

## Beschreibung

Die Erfindung betrifft ein Flachprodukt aus einem Metallwerkstoff, insbesondere einem Stahlwerkstoff, eine vorteilhafte Verwendung und eine zur Herstellung eines solchen Flachprodukts besonders geeignete Walze sowie ein Verfahren zur Herstellung derartiger Flachprodukte. Unter "Flachprodukten" werden dabei aus einem Metall oder einer Metalllegierung hergestellte Bleche, insbesondere Feinbleche, oder vergleichbar beschaffene Bänder und andere Walzerzeugnisse verstanden.

Aus Flachprodukten der hier in Rede stehenden Art werden Bauteile hergestellt, die anschließend mit einer oder mehreren Lackschichten beschichtet werden, um sie gegen mögliche Korrosion zu schützen und ihre optische Erscheinung zu optimieren. Die Güte der optischen Erscheinung wird dabei unter anderem daran beurteilt, wie stark die Oberflächenstruktur des jeweiligen Blechsubstrats sich auf die Oberfläche der Lackbeschichtung auswirkt.

Besonders hohe Anforderungen werden an das Erscheinungsbild der von außen sichtbaren Flächen von Automobil-Karosserieteilen gestellt. In der Praxis werden diese Anforderungen durch den Auftrag mehrschichtiger Lacksysteme erfüllt. Diese Lacksysteme umfassen üblicherweise mindestens eine "Füller-Schicht", die insbesondere dazu dient, auf der zu beschichtenden Oberfläche vorhandene Unebenheiten auszugleichen.

Der mit dem Auftrag mehrschichtiger Lacksysteme auf ein Blech verbundene Aufwand ist erheblich. Um diesen Aufwand zu verringern und somit eine Prozesskosteneinsparung zu erzielen, wurden Lackierverfahren entwickelt, die ohne "Füller-Schicht" auskommen. Diese aktuellen Lackierverfahren werden zunehmend in der Automobilindustrie angewandt. Da sich dabei die Gesamtschichtdicke des Lackaufbaus erheblich verringert, steigen die Anforderungen an die Oberflächenbeschaffenheit der hierzu verwendeten Bleche, um sicherzustellen, dass sich Unebenheiten der Blechoberfläche nicht im Decklack abzeichnen.

Ein weiteres Kriterium bei der Beurteilung der Eignung eines Metallflachprodukts für die Herstellung von Karosseriebauteilen ist sein Verhalten bei der Umformung zu dem jeweiligen Bauteil. Denn auch dieses Umformverhalten ist von der Oberflächenstruktur des jeweiligen Flachprodukts abhängig. So bilden beispielsweise auf der Oberfläche eines Metallblechs vorhandene Vertiefungen beim Tiefziehen sogenannte Schmiermitteltaschen, in denen sich ein vor dem Umformen auf das Blech aufgetragenes oder in das Umformwerkzeug gegebenes Schmiermittel sammeln kann. Die Tragfähigkeit des von dem Schmiermittel gebildeten Schmierfilms hängt dabei von der Gestaltung und Verteilung dieser Vertiefungen ab.

Es existieren verschiedene Vorschläge, die Oberflächen von Metallblechen so zu strukturieren, dass sie nach einer Lackierung ein optimiertes Erscheinungsbild besitzen. Zum Beispiel wird in der JP-A-63-50488 sowie der JP-A-1-293907 die Erzeugung von regelmäßigen Oberflächenstrukturen vorgeschlagen, die zylinderförmige, stempelartige Erhebungen aufweisen, welche jeweils von einer nutförmigen Vertiefung umrandet sind und aus einer ansonsten ebenen Grundfläche herausragen.

Gemäß der JP-A-63-50488 sollen sich dabei die Plateaus der Erhebungen um etwa 2 - 10 µm oberhalb der Böden der zwischen den Erhebungen vorhandenen Talbereiche befinden. Zugleich soll der gemeinsame Anteil der ebenen Plateaus der Berge und der ebenen Flächen der zwischen den Böden der Täler und den Bergplateaus vorhandenen mittelflachen Bereiche 20 - 90 % der Gesamtfläche betragen. Zur Erzeugung dieser Oberflächenstruktur wird eine Dressierwalze verwendet, deren Oberfläche mittels eines Lasers bearbeitet wurde.

In der JP-A-1-293907 wird darüber hinaus gefordert, dass der Anteil der flächen, zwischen den im Querschnitt kreisförmigen und regelmäßig angeordneten Erhebungen vorhandenen Bereiche mindestens 85 % der Blechoberfläche einnehmen soll, dass die Tiefe der die Erhebungen umgebenden Täler von den flachen Bereichen ausgehend mindestens 4 µm betragen soll, und dass bei einer Frequenzanalyse der Stahlblechgeometrie die Intensität der Wellenlängenanteile der Wellenlänge λ, die in einem Bereich vom 585 µm < λ < 2730 µm liegen, maximal 0,6 µm² beträgt.

Die gemäß den beiden vorgenannten japanischen Patentanmeldungen beschaffenen Bleche sollen im lackierten Zustand einen hervorragend lebendigen Eindruck hinterlassen. Diese vorgegebenen Anforderungen setzen deterministische Oberflächenstrukturen voraus. Insbesondere die hohen, aber nach der JP-A-1-293907 zulässigen Intensitäten in den dort genannten Wellenlängenanteilen treten nur bei deterministischen Oberflächenstrukturen mit starker Periodizität auf.

Neben Dressierwalzen, die deterministische Oberflächenstrukturen aufweisen, sind auch Dressierwalzen bekannt, die stochastische Oberflächenstrukturen aufweisen. Zur Erzeugung solcher Oberflächenstrukturen wird unter anderem das Shot-Blast-Verfahren eingesetzt, bei dem kantiges Strahlkorn aus Hartguss auf die zu texturierende Walzenoberfläche der rotierenden Walze geschleudert wird. Die so erzeugte Rauheitsstruktur entspricht einer stochastischen Verteilung gebirgsähnlich ineinander übergehender, plastischer Einzelverformungen. Die Reproduzierbarkeit des Shot-Blast-Verfahrens ist jedoch aufgrund eines zu großen Streubereichs der Prozessparameter nicht ausreichend.

Ein weiteres Verfahren zur Erzeugung texturierter Feinbleche mit stochastischer Oberflächenstruktur ist aus der Veröffentlichung "Stahl und Eisen" 118 (1998) Nr. 3, Seiten 75-80 bekannt. Dabei wird die zur Texturierung der Feinbleche verwendete Walze in einem geschlossenen Reaktorsystem mit einem verschleißfesten Chrom-Mehrschichtsystem beschichtet. Die Rauheitsstruktur dieses Chrom-Mehrschichtsystems ist durch eine relativ gleichmäßige stochastische Verteilung unterschiedlich großer Halbkugeln gekennzeichnet, die beim Dressieren in Form entsprechender Kalotten auf das Feinblech übertragen werden.

Ein weiteres Verfahren zur Erzeugung texturierter Flachprodukte, insbesondere Feinbleche mit stochastischer Oberflächenstruktur ist aus der EP 2 006 037 B1 bekannt. Dabei wird die zur Texturierung der Feinbleche verwendete Walze mittels Funkenerosion (Electro Discharge Texturing, EDT) texturiert. Ausgangszustand vor der Texturierung der Walze sollte dabei eine glatt geschliffene Walzenoberfläche sein. In diese Oberfläche werden durch die Funkenerosion möglichst nah benachbarte Vertiefungen eingebracht. Die zwischen den Vertiefungen verbleibenden "Stege" haben aufgrund des glatten Ausgangszustands der Walzenoberfläche bereits die gewünschte gleiche Höhe. Im Zuge des EDT-Verfahrens wird kurzzeitig, gegebenenfalls periodisch, eine definierte Spannung zwischen Elektrode und Walze angelegt. Dabei werden durch den Funkenerosionskanal Ladungsträger (Ionen) aus einem Elektrolyt heraus zur Walzenoberfläche hin beschleunigt. Beim Auftreffen auf die Walzenoberfläche lösen sie dort Walzenmaterial heraus und erzeugen eine Vertiefung. Das heraus gelöste und geschmolzene Walzenmaterial wird über die Elektrodenspülung abtransportiert und ist aufgrund des dielektrischen Öls im Wesentlichen nicht in der Lage, sich wieder mit der Walzenoberfläche zu verbinden. Es ist allerdings in der Praxis nicht gänzlich zu verhindern, dass sich beim Texturiervorgang aufgeschmolzenes Walzenmaterial auf der ursprünglich glatt geschliffenen Oberfläche ansammelt. Dieses Material kann in an sich bekannter Weise durch einen Feinschleifprozess entfernt werden.

Mit den Verfahren zur Erzeugung stochastischer Oberflächenstrukturen ist es jedoch nicht möglich, mikrostrukturierte Oberflächen so zu erzeugen, dass sich anforderungsgerechte Kennwerte für Rauheit und geringe Langwelligkeit zur Vermeidung des sogenannten Orangenhaut-Effektes unabhängig voneinander definiert einstellen lassen.

Vor diesem Hintergrund lag der vorliegenden Erfindung die Aufgabe zugrunde, ein Flachprodukt der eingangs genannten Art, insbesondere mit definiertem Ölaufnahmevermögen, optimalem Umformverhalten und guter Voraussetzung für eine Lackanmutung zu schaffen, das auch bei niedriger Gesamtschichtdicke des Lackaufbaus im fertig lackierten Zustand ein hervorragendes Erscheinungsbild aufweist. Außerdem sollten eine bevorzugte Verwendung eines solchen Flachproduktes, eine Walze, die zur Herstellung eines solchen Flachproduktes besonders geeignet ist, sowie ein Verfahren zur Herstellung eines derartigen Flachproduktes angegeben werden.

In Bezug auf das Flachprodukt ist diese Aufgabe erfindungsgemäß durch die Lehre des Anspruchs 1 gelöst worden.

Das erfindungsgemäße Flachprodukt ist durch eine deterministische Oberflächenstruktur gekennzeichnet, die eine Vielzahl von Vertiefungen besitzt, die eine Tiefe im Bereich von 2 bis 14 µm aufweisen, wobei die Vertiefungen I-förmig, doppel-I-förmig, H-förmig, kreuzförmig, C-förmig oder X-förmig ausgebildet sind, und wobei die Oberflächstruktur eine Spitzenzahl RPc im Bereich von 45 bis 180 1/cm, eine arithmetische Mittenrauheit Ra im Bereich von 0,3 bis 3,6 µm und eine arithmetische Mittenwelligkeit Wsa im Bereich von 0,05 bis 0,65 µm aufweist.

Bevorzugte und vorteilhafte Ausgestaltungen des erfindungsgemäßen Flachproduktes sind in den Unteransprüchen angegeben.

Entsprechend ausgebildete Flachprodukte weisen ein optimiertes Umformverhalten sowie eine verbesserte Lackanmutung auf, wenn vorzugsweise die Tiefe der Vertiefungen im Bereich zwischen 3 und 13 µm gewählt wird. Umfangreiche Versuche haben gezeigt, dass entsprechend ausgeführte erfindungsgemäße Feinbleche besonders gute tribologische Eigenschaften (Umformeigenschaften) besitzen. Die aus diesen Feinblechen durch Umformen hergestellten Bauteile zeichneten sich nach einer automobil-typischen Lackierung durch eine hervorragende Lackanmutung aus. Eine weitere vorteilhafte Ausgestaltung des erfindungsgemäßen Flachproduktes sieht vor, dass die Vertiefungen geschlossen, linear und/oder gekrümmt ausgebildet sind.

Nach einer bevorzugten Ausgestaltung liegt die arithmetische Mittenrauheit Ra der Oberflächenstruktur des erfindungsgemäßen Flachprodukts im Bereich von 1,0 bis 2,5 µm, vorzugsweise im Bereich von 1,0 bis 2,0 µm, besonders bevorzugt im Bereich von 1,0 bis 1,6 µm. Entsprechend ausgebildete Metallflachprodukte zeichnen sich durch sehr gute tribologische Eigenschaften aus und ergeben nach einer automobil-typischen Lackierung eine gegenüber Metallflachprodukte des Standes der Technik verbesserte Lackanmutung.

Diese sehr gute Lackanmutung und tribologischen Eigenschaften lassen sich insbesondere mit einer bevorzugten Ausgestaltung der Erfindung erzielen, bei der die geschlossenen, linear und/oder gekrümmt ausgebildeten Vertiefungen zueinander in einem sich wiederholenden Muster angeordnet sind. Beispielsweise sind I-förmige Vertiefungen in der vorzugsweise deterministischen Oberflächenstruktur zueinander in Form eines Fischgrätmusters angeordnet. Besonders vorteilhaft hinsichtlich der Lackanmutung und tribologischen Eigenschaften ist eine Ausgestaltung des erfindungsgemäßen Flachproduktes, bei der I-förmige Vertiefungen der vorzugsweise deterministischen Oberflächenstruktur derart angeordnet sind, dass sie eine Vielzahl von Paaren definieren, die beispielsweise jeweils aus parallel zueinander verlaufenden I-förmigen Vertiefungen bestehen.

Eine weitere vorteilhafte Ausgestaltung des erfindungsgemäßen Flachproduktes ist dadurch gekennzeichnet, dass die aus beispielsweise parallel zueinander verlaufenden I-förmigen Vertiefungen bestehenden Paare oder die H-förmigen Vertiefungen der deterministischen Oberflächenstruktur zueinander in Form eines Schachbrettmusters angeordnet sind. Versuche haben gezeigt, dass entsprechend ausgeführte erfindungsgemäße Feinbleche bei einem typischen Umformprozess (Tiefziehprozess) einen geringen Abrieb aufweisen. Die so ausgeführten erfindungsgemäßen Feinbleche zeichnen sich insbesondere durch sehr niedrige Reibbeiwerte, eine sehr geringe und späte Neigung zum sogenannten Slip-Stick-Effekt, d.h. schneller Wechsel zwischen Haft- und Gleitreibung bei der Ermittlung des Reibbeiwertes, und sehr gute Umformeigenschaften bei angepasstem Beölungsvolumen, insbesondere bei Tiefziehbeanspruchung, aus. Die überwiegend geschlossenen Leervolumina (Schmieröltaschen) in der erfindungsgemäßen Feinblechoberfläche zeigten auch bei hohen Umformkräften eine hohe Beständigkeit.

Die auf dem Flachprodukt, insbesondere Feinblech erfindungsgemäß erzeugte Oberflächenstruktur definiert vorzugsweise überwiegend geschlossene Leervolumen. Die Oberflächenstruktur ist dabei vorzugsweise im Wesentlichen oder annähend symmetrisch bzw. achsensymmetrisch ausgebildet.

Aufgrund ihres besonderen Eigenschaftsprofils lassen sich erfindungsgemäße Flachprodukte besonders für die Herstellung von Bauteilen verwenden, die mit einer Lackschicht versehen werden sollen. Dies gilt insbesondere dann, wenn die erfindungsgemäßen Flachprodukte aus Stahl gefertigt sind und insbesondere mit einer Korrosionsschutzschicht, beispielsweise eine Verzinkung, versehen sind. Ein solches Stahlblech kann beispielsweise mit einem Zink- oder einem Zink-Magnesium-Überzug beschichtet sein. Allerdings lassen sich die erfindungsgemäß vorgegebenen Kriterien auch für Flachprodukte anwenden, die aus anderem Metall hergestellt sind.

Insbesondere eignen sich erfindungsgemäße Flachprodukte zur Herstellung von Karosseriebauteilen. Diese können nach ihrer Formgebung auch mit verkürzten Lackierprozessen, insbesondere solchen ohne Auftrag einer Füller-Schicht ("füllerlose Lackierung"), mit einer Lackbeschichtung versehen werden, die höchsten Anforderungen an ihre äußere Erscheinung auf dem jeweiligen Bauteil erfüllt. Die erfindungsgemäß vorgegebene Oberflächenstruktur ist so feingliedrig, dass in optischer sowie technischer Hinsicht auch schon bei einem gegenüber dem Stand der Technik erheblich reduzierten Schichtaufbau der Lackierung einwandfreie Beschichtungsergebnisse erzielt werden.

Hinsichtlich der zur Herstellung eines erfindungsgemäßen Flachproduktes besonders geeigneten Walze besteht die Lösung der oben genannten Aufgabe erfindungsgemäß in der im Anspruch 11 definierten Walze.

Die erfindungsgemäße Walze weist eine deterministische Oberflächenstruktur auf, die eine Vielzahl von sich überlappenden Näpfchen aufweist, die so angeordnet sind, dass sie I-förmige, doppel-I-förmige, H-förmige, kreuzförmige, C-förmige oder X-förmige Materialstrukturen in der Walzenoberfläche begrenzen, wobei die Oberflächenstruktur der Walze gemessen in Walzachsrichtung durch eine Spitzenzahl RPc im Bereich von 80 bis 180 1/cm, eine arithmetische Mittenrauheit Ra im Bereich von 1,0 µm, insbesondere 1,5 µm, vorzugsweise 2,5 µm bis 3,5 µm und eine arithmetische Mittenwelligkeit Wsa im Bereich von 0,08 bis 1,0 µm gekennzeichnet ist.

Darüber hinaus stellt die Erfindung in Anspruch 17 ein Verfahren zur Verfügung, welches die zuverlässige Herstellung von metallischen Flachprodukten gestattet, die sich besser umformen und vereinfacht lackieren lassen.

Der Erfindung liegt die Erkenntnis zugrunde, dass sich unter Berücksichtigung der erfindungsgemäß vorgegebenen Kriterien planmäßig ein Metallflachprodukt mit einer so feingliedrigen, im Wesentlichen deterministischen Oberflächenstruktur zur Verfügung stellen lässt, dass sie nach einer automobil-typischen Lackierung wenn überhaupt, dann aber nur schwach visuell wahrnehmbar ist.

Insbesondere liegt der vorliegenden Erfindung die Erkenntnis zugrunde, dass sich die zur Herstellung eines erfindungsgemäßen Flachproduktes besonders geeignete Walze vorteilhaft mittels eines Kurzpulslasers (bzw. Kurzpulslaserverfahrens), insbesondere eines Ultrakurzpulslasers, texturieren lässt. Die Walze ist beispielsweise aus einem Stahlwerkstoff, vorzugsweise aus einem klassischen Kaltwalzenstahl mit einem Chromgehalt von bis 3% hergestellt.

Ein geeigneter Kurzpulslaser (Pulsfaserlaser) hat beispielsweise eine Pulswiederholfrequenz von ca. 100 kHz bei einer Wellenlänge von ca. 1070 nm. Die Pulsdauer beträgt beispielsweise ca. 1 µs. Die mittlere Leistung des Lasers zur Erzeugung der erfindungsgemäßen Walzentexturierung liegt beispielsweise im Bereich von 15 bis 100 W, vorzugsweise im Bereich von 20 bis 70 W. Die Walze kann nach der Lasertexturierung noch geschliffen (Superfinish) und ggf. hartverchromt werden. Die Oberfläche der Walze zeichnet sich dadurch aus, dass die Näpfchen keinen wesentlichen Aufwurf, wie sie im Vergleich beim EDT-Verfahren auftreten, aufweisen. Je kürzer der Laserpuls (z. B. ps-Laser), desto geringer ist der Aufwurf.

Die Tiefe der in der Walzenoberfläche eingebrachten Näpfchen liegt vorzugsweise im Bereich von 6 bis 14 µm, besonders bevorzugt im Bereich von 8 bis 13 µm. Der mittlere Durchmesser der Näpfchen beträgt ca. 20 bis 80 µm, vorzugsweise ca. 20 bis 40 µm, und besonders bevorzugt ca. 22 bis 35 µm.

Mit der erfindungsgemäßen Walze bzw. dem hier beschriebenen Verfahren zur Texturierung ihrer Oberfläche können die Rauheitskennwerte Ra, RPc (nach EN ISO 10049) und die Langwelligkeit Wsa (sogenannte Orangenhaut mit Wellenlängenbereichen von ca. 1-5 mm, vgl. STAHL-EISEN-Prüfblätter (SEP) 1941, 1. Ausgabe, Mai 2012) unabhängig voneinander definiert eingestellt werden.

Nachfolgend wird die Erfindung anhand einer mehrere Ausführungsbeispiele darstellenden Zeichnung näher erläutert. Es zeigen:
- Fig. 1: eine Prinzipdarstellung der Texturierung einer Dressierwalze mittels eines gepulsten Lasers (Kurz-Puls-Laser);
- Fig. 2 bis 4: schematische Darstellungen der Laserstrahlwirkung bzw. Wechselwirkungen an einem Materialabschnitt einer Walze;
- Fig. 5: ein Näpfchenprofil, erzeugt mittels Laserstrahlintensitätsprofil;
- Fig. 6: eine Näpfchenstruktur einer erfindungsgemäßen Dressierwalze gemäß einem ersten Ausführungsbeispiel, in schematischer Darstellung;
- Fig. 7 bis 9: weitere verschiedene Näpfchenstrukturen einer erfindungsgemäßen Dressierwalze gemäß weiterer Ausführungsbeispiele, in schematischer Darstellung;
- Fig. 10 und 11: Abschnitte von Oberflächenstrukturen erfindungsgemäßer Flachprodukte;
- Fig. 12: das Umformverhalten von erfindungsgemäßen Flachprodukten bei verschiedenen Ölauflagen;
- Fig. 13: das Abriebverhalten verschiedener oberflächenveredelter Feinbleche;
- Fig. 14: eine Prinzipskizze eines Umformversuchs ("Näpfchen-Versuchs"); und
- Fig. 15: einen Ergebnisvergleich betreffend verschiedene oberflächenveredelte Feinbleche, die einem Umformversuch gemäß Fig. 14 unterzogen wurden.

Die erfindungsgemäßen Oberflächenstrukturen mit deterministischer Verteilung der Gestaltsmerkmale (Strukturmerkmale) werden mit einem Walzentexturierverfahren hergestellt, das für den Materialabtrag auf der Oberfläche einer rotierenden Walze einen gepulsten Laser, vorzugsweise einen Kurz-Puls- oder Ultra-Kurz-Puls-Laser verwendet.

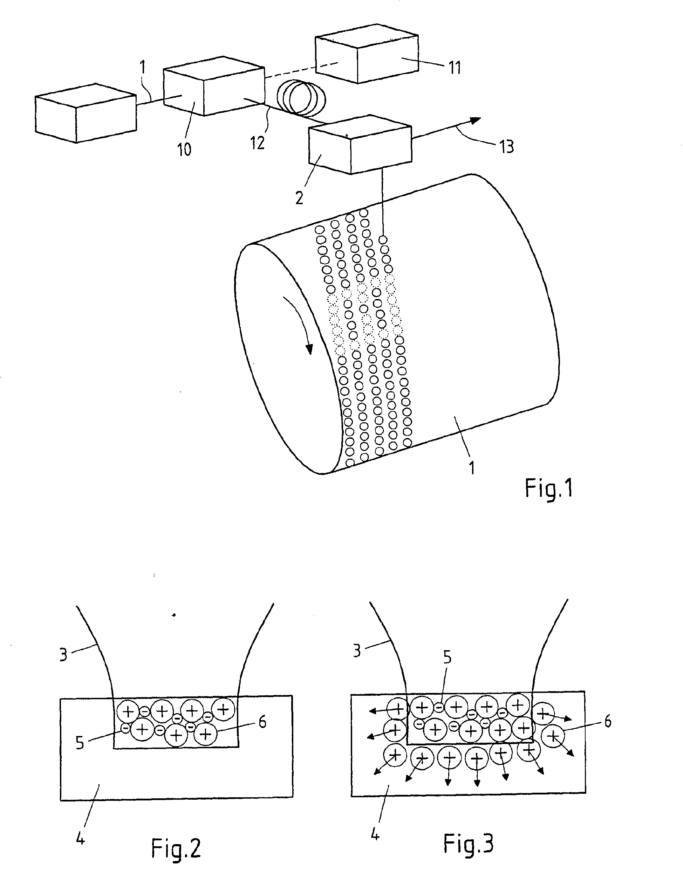

Hierzu wird die zu gravierende Walze 1 in einer Drehvorrichtung rotiert. Während die Walze schnell rotiert, wird eine Fokussieroptik 2, die den Laserstrahl auf die Walzenoberfläche fokussiert, mit relativ geringer Geschwindigkeit transversal in Walzenachsrichtung bewegt. Der Laserstrahl beschreibt somit auf der Walzenoberfläche eine helixförmige Bahn (Fig. 1).

Der Laserstrahl 3 dringt während einer Pulsdauer von ca. 1 µs bis zu einer bestimmten Tiefe in das Material 4 der Walze 1 ein. Das Material 4 bzw. Oberflächenmaterial der Walze 1 besteht aus freien Leitungsbandelektronen 5 und positiven Metallionen 6 (Fig. 2).

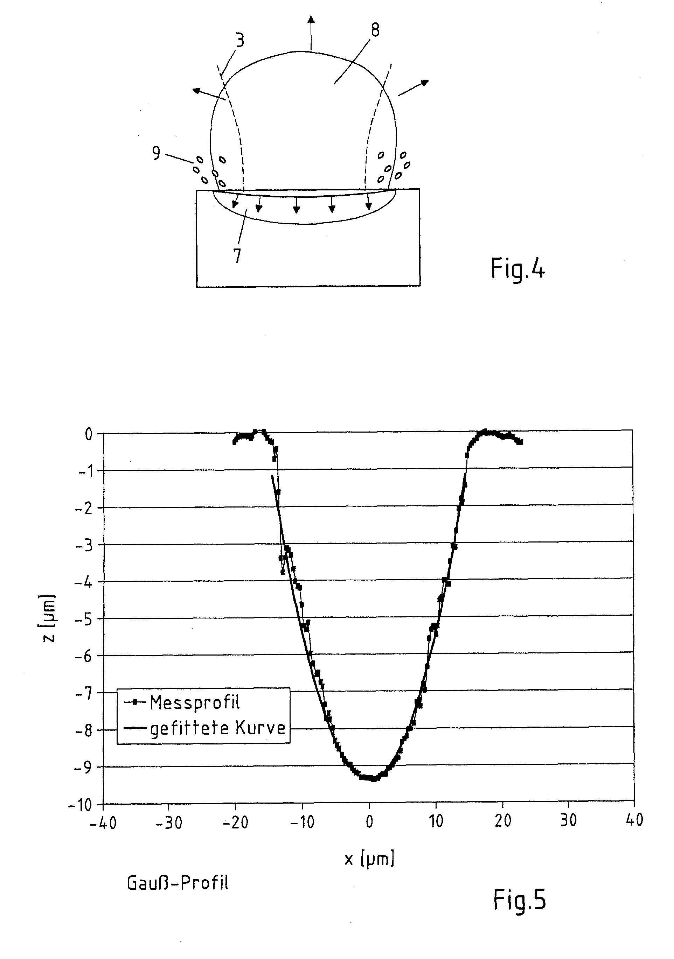

Durch das elektromagnetische Feld des Laserstrahls 1 werden die Elektronen 5 beschleunigt und übertragen schließlich während der Wechselwirkungszeit ihre kinetische Energie an die Metallionen 6. Diese werden dadurch in Schwingungen versetzt und transferieren die Schwingungsenergie an benachbarte Metallionen, die sich außerhalb der reinen Wechselwirkungszone zwischen der Laserstrahlung und dem Material der Walze befinden (Fig. 3). Auf diese Weise kommt es zur Wärmeerzeugung in dem bestrahlten Walzenmaterial 4. Durch weitere Laserenergiezufuhr während der Pulszeit (Fig. 4) wird das Material aufgeschmolzen. Schließlich wird die Verdampfungstemperatur erreicht, und ein Teil der Schmelze 7 verdampft. Die sich oberhalb der Schmelze 7 ausbildende Metalldampfwolke 8 expandiert schnell, wobei der Rückstoßeffekt ein Austreiben der restlichen Schmelze in Form von schmelzflüssigen Spritzern 9 bewirkt. Das Kurzpulslaserverfahren zeichnet sich durch ein relativ großes Materialabtragevolumen pro Puls aus.

Durch Wahl der Parameter Pulsfrequenz, Pulsenergie, Abstand der Spuren auf der rotierenden Walzenoberfläche, Laserauftreffpunktdurchmesser (Spotdurchmesser), Laserintensitätsprofile und/oder Drehzahl der Walze wird die Verteilung und die Geometrie der Näpfchen auf der Walzenoberfläche bestimmt. Durch eine Überlappung einzelner Näpfchen werden talförmige, zusammenhängende Bereich graviert bzw. erzeugt.

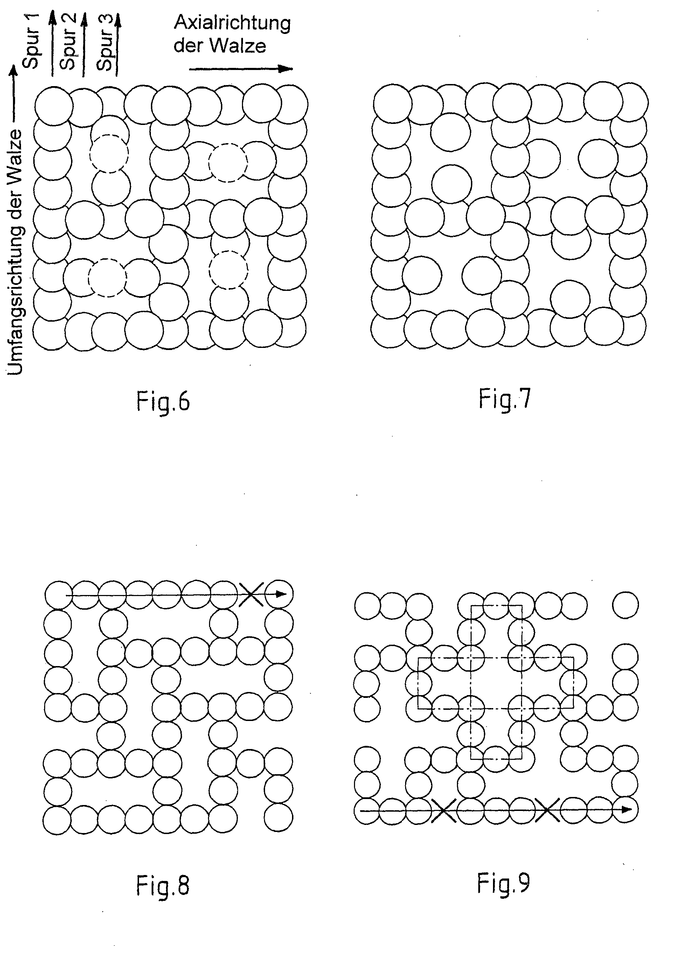

Für die in den Figuren 6 bis 9 beispielhaft dargestellten deterministischen Stuktur-Varianten wurde die schnelle kontinuierliche Folge der Laserpulse gezielt unterbrochen. Die Unterbrechung der Laserpulse wurde mittels eines schnellen optischen Schalters, einem AOM (Akustoopischer Modulator) 10 realisiert (vgl. Fig.1). Durch schnelles Zu- und Abschalten des AOM (10) wurden somit deterministisch einzelne Laserpulse entweder auf die Walzenoberfläche projiziert oder aber auf eine Kühlfalle 11 umgelenkt und dort vernichtet.

Der hierzu eingesetzte Laser (Pulsfaserlaser) hatte eine maximale mittlere Leistung von 500 W und eine Pulswiederholfrequenz von ca. 100 kHz bei einer Wellenlänge von ca. 1070 nm. Die Pulsdauer sollte nicht mehr als 1,5 µs betragen. In den durchgeführten Versuchen betrug sie beispielsweise ca. 1 µs.

Nach Passieren des AOM (10) wurde der Laserstrahl 1 mit Hilfe eines Lichtleiterkabels 12 zu der Fokussieroptik 2 geleitet. Der Pfeil 13 bezeichnet die Bewegungsrichtung der Fokussieroptik 2.

Die Form der Strukturen wurde in ein eigens dafür vorgesehenes Bildverarbeitungsprogramm übertragen. Dieses Programm ermöglichte in Abhängigkeit von der Pulsfolgefrequenz (100 kHz), die Walzendrehzahl und die Vorschubgeschwindigkeit der Axialachse der Fokussieroptik 2 zu ermitteln sowie den AOM 10 so anzusteuern, dass die Dichte der Näpfchen und deren deterministische Verteilung entsprechend der Struktur-Design-Vorgaben erzeugt wurden.

Die ebenfalls spezifizierte Geometrie der einzelnen Näpfchen (Durchmesser, Tiefe und Flankenwinkel) wurde durch Optimierung der Parameter Pulsenergie und Spotdurchmesser sowie durch eine spezielle Modulation des Laserstrahlintensitätsprofils (Gauß-Profil) erreicht (Fig. 5). Alternativ oder ergänzend zu dem Gauß-Profil kann auch das dem Fachmann geläufige Top Hat-Profil zur Modulation verwendet werden. Die auf der Walzenoberfläche erzeugten Laserkrater (Näpfchen) weisen ein entsprechendes gaußförmiges Profil auf. Der Flankenwinkel bzw. der maximale Flankenwinkel der Näpfchen ist größer 45°, vorzugsweise größer 60°, und besonders bevorzugt größer 70°. Die Näpfchen weisen also einen steilen Flankenwinkel auf. Figur 6 zeigt einen Ausschnitt der auf der Oberfläche der Walze, beispielsweise einer Dressierwalze, mit einem Durchmesser von 440 mm zu erzeugenden Struktur. Sie hat in Spur 1, die im Wesentlichen parallel zum Umfang der Walze ausgerichtet ist, eine Dichte von 42 Näpfchen/mm, die lückenlos mit einem Überlapp von z. B. 1 µm aneinandergereiht sind. Zur Erzielung dieser Dichte wird bei einer Pulsfrequenz des Lasers von 100 kHz eine Umfangsgeschwindigkeit von 2,35 m/s benötigt, was einer Umdrehungszahl der Walze von 1,7 s⁻¹ entspricht. In den Spuren 2 und 3, die im Wesentlichen parallel zum Umfang der Walze ausgerichtet sind, werden Näpfchen durch Leistungsmodulation des Laserstrahls mithilfe eines AOM's an den entsprechenden Positionen ausgelassen. In Spur 2 fehlen 23 Näpfchen/mm und in Spur 3 fehlen 9 Näpfchen/mm im Vergleich zu der Spur 1. Die Modulation des AOM's und auch die Auslösung (Triggerung) der Laserpulse müssen mit den bewegten Achsen, d. h. mit der Position des Winkelencoders am Walzenrotationsantrieb sowie mit der Axialachse der Fokussieroptik synchronisiert werden, um ein ortsgenaues, deterministisches Raster mit festgelegten Näpfchenabständen in Richtung beider Achsen zu erzeugen. Der Abstand benachbarter Spuren beträgt in diesem Beispiel 23 µm, die Axialgeschwindigkeit der Fokussieroptik 39 µm/s. Weitere Parameter waren:
Mittlere Laserleistung: ca. 40 W
Pulsenergie: ca. 0,4 mJ
Durchmesser der Einzelkrater: ca. 25 µm
Tiefe der Einzelkrater: ca. 7 µm

Mit einer entsprechenden Walze wurden Flachprodukte dressiert. Bei den Flachprodukten handelte es sich um feingeglühtes Kaltband, beispielsweise der Güten IF- und/oder BH-Stähle. Ein DC 06 (IF-Stahl) mit einer Dicke von 0,7 mm wurde bei einer Walzgeschwindigkeit von 145 m/min, einer spezifischen Walzkraft, bezogen auf die Bandbreite, mit 1,1 kN/mm und einem Dressiergrad von 0,5 % texturiert. In einem weiteren Beispiel wurde ein HC 180 B (BH-Stahl) mit einer Dicke von 0,7 mm bei einer Walzgeschwindigkeit von 140 m/min, einer spezifischen Walzkraft, bezogen auf die Bandbreite, mit 6 kN/mm und einem Dressiergrad von 1,4 % texturiert. Die Kaltbänder wurden anschließend elektrolytisch verzinkt. Ähnliche Versuche wurden auch bei feuerverzinktem Feinblech durchgeführt.

Mit entsprechenden oder ähnlichen Parametern lassen sich auch die in den Figuren 7 bis 9 dargestellten Strukturen auf der Walzenoberfläche generieren.

Der in Fig. 6 schematisch dargestellte Flächenabschnitt der Oberflächenstruktur einer Walze weist linienförmig aneinandergereihte, sich überlappende Näpfchen auf, die so angeordnet sind, dass sie eine Vielzahl von doppel-I-förmigen Materialstrukturen in der Walzenoberfläche begrenzen. Des Weiteren sind die doppel-I-förmigen Materialstrukturen zueinander in Form eines Schachbrettmusters angeordnet. Die aneinandergereihten, sich überlappenden Näpfchen bilden auf der Walzenoberfläche offene Leervolumina. Die Walze kann nach der Lasertexturierung noch geschliffen und gegebenenfalls hartverchromt werden.

Die Walzenoberflächenstruktur gemäß Fig. 6 gemessen in Walzachsrichtung besitzt schließlich eine Spitzenzahl RPc im Bereich von ca. 140 bis 160 1/cm, eine arithmetische Mittenrauheit Ra im Bereich von 2,5 bis 2,8 µm und eine arithmetische Mittenwelligkeit Wsa im Bereich von 0,1 bis 0,2 µm. Die Standardabweichung (σ) der Berg- bzw. Talniveaus (flache Bereiche) der Walzenoberfläche beträgt ca. 0,6 µm bzw. 2 µm. Der Glattanteil (nicht texturierte Fläche) liegt bei ca. 25 %.

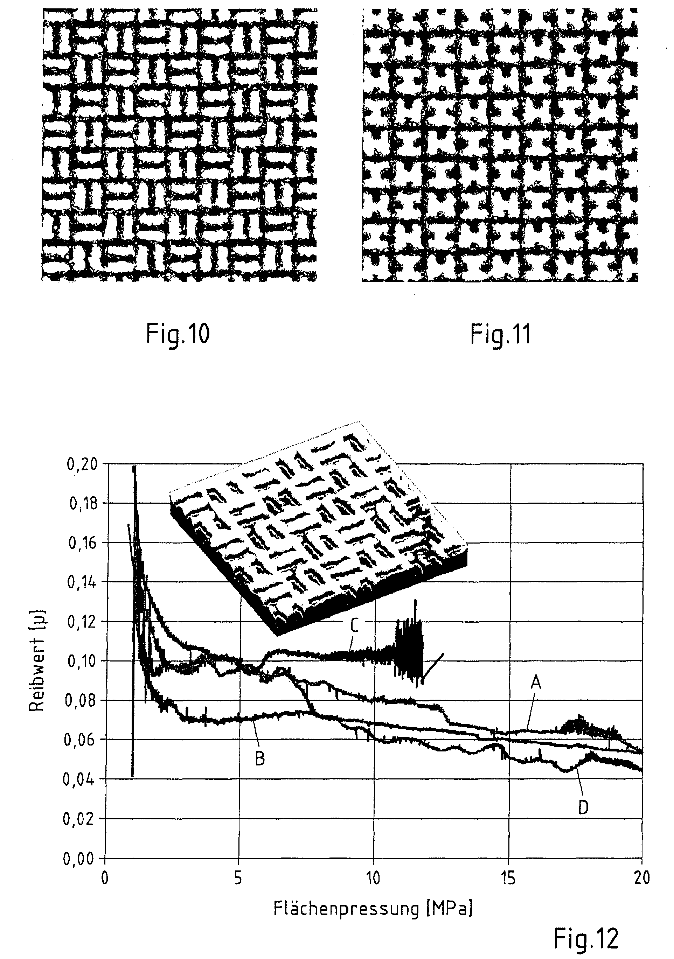

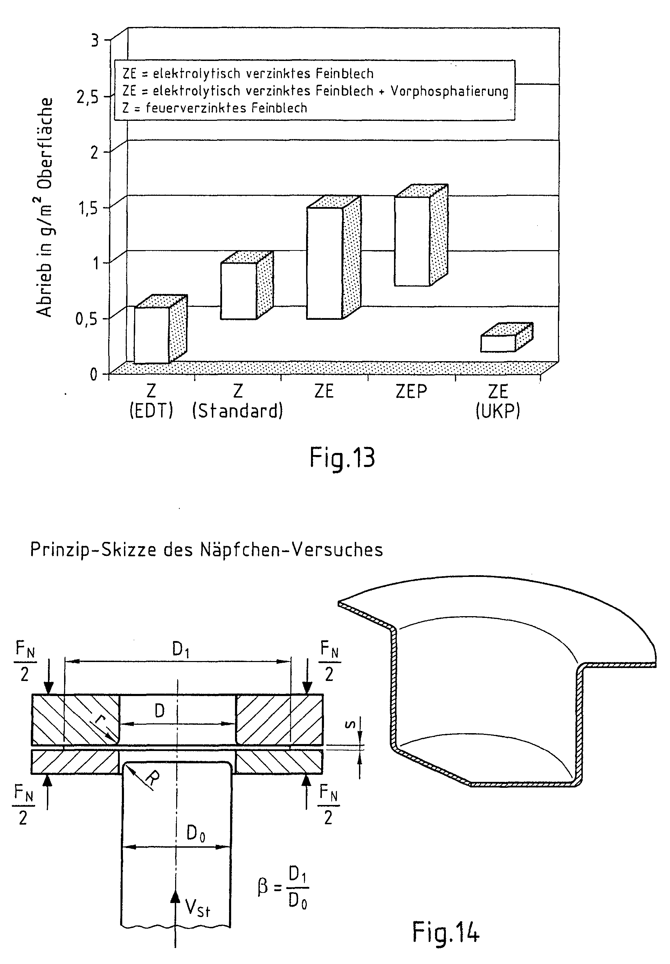

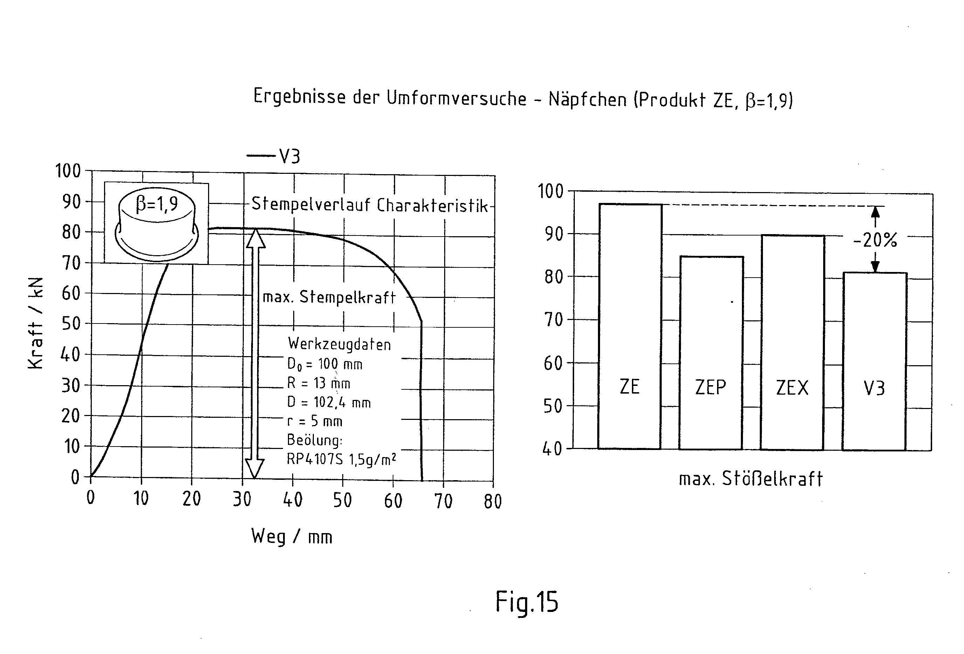

Die mit einer solchen Walze dressierten Flachprodukte, insbesondere Feinbleche, weisen dann eine texturierte Oberfläche auf, die durch eine deterministische Doppel-I-Struktur mit überwiegend geschlossenen Leervolumen gekennzeichnet ist. Untersuchungen von so hergestellten erfindungsgemäßen Feinblechen haben ergeben, dass diese im Vergleich zu Feinblechen des Standes der Technik, insbesondere solchen, die mittels EDT texturierten Walzen hergestellt wurden, folgende Gebrauchseigenschaften besitzen: verbesserte Lackanmutung, geringer Abrieb beim Umformprozess (vgl. Fig. 13), sehr niedrige Reibbeiwerte (vgl. Fig. 12), sehr geringe und späte (zu hohen Flächenpressungen hin verschobene) Neigung zum Slip-Stick-Effekt (vgl. Fig. 12), sehr gute Umformeigenschaften bei angepasstem Beölungsvolumen, insbesondere bei Tiefziehbeanspruchungen (vgl. Fig. 15), Erhalt der geschlossenen Struktur auch bei hohen Umformkräften.

In Fig. 12 sind Messergebnisse des Reibbeiwertes für elektrolytisch verzinkte, erfindungsgemäß texturierte Feinbleche verschiedener Stahlgüten bei unterschiedlichen Ölauflagen in Abhängigkeit der Flächenpressung dargestellt, wobei diese verzinkten Feinbleche eine doppel-I-Struktur gemäß Fig. 10 erhielten (in Fig. 15 mit V3 bezeichnet). Die Messkurve A betrifft ein verzinktes IF-Stahl-Feinblech mit einer Ölauflage von 1,5 g/m²; die Messkurve B ein verzinktes IF-Stahl-Feinblech mit einer Ölauflage von 3 g/m²; die Messkurve C betrifft ein verzinktes BH-Stahl-Feinblech mit einer Ölauflage von 1,5 g/m²; und die Messkurve D betrifft ein verzinktes BH-Stahl-Feinblech mit einer Ölauflage von 3 g/m².

In Fig. 13 ist das Abriebverhalten von oberflächenveredelten Feinblechen dargestellt. Die Abriebwerte wurden durch Streifenziehversuche mittels Flachbackenwerkzeugen ermittelt. Es ist zu erkennen, dass sich ein mit einer EDT texturierten Walze texturiertes Feinblech, in Fig. 13 mit "EDT" bezeichnet, durch einen niedrigen Abrieb auszeichnet. Allerdings ist in Fig. 13 auch zu sehen, dass sich ein elektrolytisch verzinktes Feinblech, welches mittels einer durch Anwendung des Ultra-Kurz-Puls-Laserverfahrens (UKP) texturierten Walze erfindungsgemäß dressiert wurde, durch einen sehr niedrigen Abrieb von ca. 0,2 g/m² auszeichnet, der noch niedriger ist als beim Feinblech "EDT".

Zur Charakterisierung der Oberflächen der erfindungsgemäß texturierten Feinbleche wurden neben den Streifenziehversuchen mit Flachbackenwerkzeugen auch Tiefziehversuche mit einem Rundstempel durchgeführt (vgl. Figuren 14 und 15; "Näpfchen-Versuch"). Als Bewertungsgröße wurde die gemessene Stempelkraft bei jeweils einer fest definierten Niederhalterkraft bewertet. Die Versuche erfolgten mit verschiedenen Ölauflagen (Beölungen).

Beim Formen eines Rundnapfes treten lokal im Bereich der Ziehradien sehr hohe Flächenpressungen auf, die sich im konventionellen Streifenziehversuch nicht messen lassen. Der Reibanteil beim Rundnapf an der gesamten Stempelkraft bzw. Stempelarbeit beträgt bis zu 1/3. Der Durchmesser D₀ des Stempels betrug ca. 100 mm. Der Stempel hatte einen Ziehradius R von 13 mm, während der Ziehradius r der Matrize 5 mm betrug (Figuren 14 und 15).

Da bei den Versuchen das gleiche Grundmaterial mit unterschiedlichen Oberflächenstrukturen verwendet wurde, lassen die aufgenommenen Kraftkurven einen direkten Vergleich der tribologischen Eigenschaften der unterschiedlichen Topographien zu. Für den Umformprozess bedeutet ein geringer Reibanteil, dass weniger Kraft über die Zarge des Rundnapfes bzw. Bauteils übertragen werden muss und erhöht die Reißergrenze bei konstantem Ziehverhältnis. Die Versuche haben ergeben, dass die erfindungsgemäße Oberflächenstruktur V3 (gemäß Fig. 10), die einen hohen Anteil an geschlossenen Leervolumina aufweist, eine deutliche Reduzierung des Stempelkraftniveaus zeigt (vgl. Fig. 15).

Der in Fig. 7 schematisch dargestellte Oberflächenabschnitt einer erfindungsgemäßen texturierten Walze weist wiederum linienförmig aneinandergereihte, sich überlappende Näpfchen auf. Im Unterschied zu dem in Fig. 6 gezeigten Ausführungsbeispiel wurden bei dem Ausführungsbeispiel gemäß Fig. 7 die in Fig. 6 gestrichelt dargestellten Laserkrater weggelassen, so dass die "Doppel-I-Materialinseln" miteinander verbunden sind. Die sich überlappenden Näpfchen sind hier somit so angeordnet, dass sie eine Vielzahl von H-förmigen Materialstrukturen in der Walzenoberfläche begrenzen. Die H-förmigen Materialstrukturen sind ebenfalls zueinander in Form eines Schachbrettmusters angeordnet, wobei die sich überlappenden Näpfchen offene Leervolumina bilden. Ein Flächenabschnitt eines Feinblechs, das mittels einer Walzenoberflächenstruktur gemäß Fig. 7 texturiert wurde, ist in Fig. 11 dargestellt.

Die Walzenoberflächenstruktur gemäß Fig. 7 gemessen in Walzachsrichtung besitzt eine Spitzenzahl RPc im Bereich von ca. 145 1/cm, eine arithmetische Mittenrauheit Ra im Bereich von 2,6 bis 2,7 µm und eine arithmetische Mittenwelligkeit Wsa im Bereich von 0,1 bis 0,2 µm. Die Standardabweichung (σ) der Berg- bzw. Talniveaus (flache Bereiche) der Walzenoberfläche beträgt ca. 0,5 µm bzw. 1,7 µm. Der Glattanteil (nicht texturierte Fläche) liegt bei ca. 38 %.

Feinbleche mit einer Oberflächenstruktur gemäß Fig. 10 und 11 besitzen folgende Gebrauchseigenschaften: verbesserte Lackanmutung, geringer Abrieb beim Umformprozess, geringe Reibbeiwerte, geringe Neigung zum Slip-Stick-Effekt, gute Umformeigenschaften bei angepasstem Beölungsvolumen, Erhalt der geschlossenen Struktur auch bei hohen Umformkräften.

Die Figuren 8 und 9 zeigen weitere Ausführungsbeispiele von erfindungsgemäß strukturierten Walzenoberflächen. Bei der Struktur gemäß Fig. 8 sind die aneinandergereihten, sich überlappenden Näpfchen so angeordnet, dass sie in der Walzenoberfläche I-förmige Materialstrukturen begrenzen, welche zueinander in Form eines Fischgrätmusters angeordnet sind. Die Linienstrukturen der aneinandergereihten Näpfchen sind hier somit unterbrochen, was in Fig. 8 in der oberen Linienstruktur durch ein Kreuz markiert ist.

Bei der Struktur gemäß Fig. 9 sind die aneinandergereihten, sich überlappenden Näpfchen so angeordnet, dass sie in der Walzenoberfläche kreuzförmige Materialstrukturen begrenzen. Die Linienstrukturen der aneinandergereihten Näpfchen sind hier ebenfalls unterbrochen, was in der unteren Linienstruktur durch zwei Kreuze markiert ist.

Grundsätzlich kann durch Änderung der Laserpulsenergie bzw. des Dressiergrades die arithmetische Mittenrauheit Ra der Walzenoberflächenstrukturen bzw. der resultierenden Feinblechoberflächenstrukturen vergrößert oder verkleinert werden.

Die Ausführung der vorliegenden Erfindung ist nicht auf die in der Zeichnung dargestellten Ausführungsbeispiele beschränkt. Vielmehr umfasst die Erfindung weitere Varianten. So können beispielsweise die aneinandergereihten, sich überlappenden Näpfchen (Laserkrater) auch so angeordnet sein, dass sie in der Walzenoberfläche C-förmige oder X-förmige Materialstrukturen begrenzen.

## Patentansprüche

1. Flachprodukt aus einem Metallwerkstoff, insbesondere einem Stahlwerkstoff, mit einer deterministischen Oberflächenstruktur, wobei die Oberflächenstruktur eine Vielzahl von Vertiefungen besitzt, die eine Tiefe im Bereich von 2 bis 14 µm aufweisen, **dadurch gekennzeichnet, dass** die Vertiefungen I-förmig, H-förmig, kreuzförmig, C-förmig oder X-förmig ausgebildet sind, wobei die Oberflächenstruktur eine Spitzenzahl RPc im Bereich von 45 bis 180 1/cm, eine arithmetische Mittenrauheit Ra im Bereich von 0,3 bis 3,6 µm und eine arithmetische Mittenwelligkeit Wsa im Bereich von 0,05 bis 0,65 µm aufweist.

2. Flachprodukt nach Anspruch 1, **dadurch gekennzeichnet, dass** die arithmetische Mittenrauheit Ra der Oberflächenstruktur im Bereich von 1,0 bis 2,5 µm, vorzugsweise im Bereich von 1,0 bis 2,0 µm, besonders bevorzugt im Bereich von 1,0 bis 1,6 µm liegt.

3. Flachprodukt nach Anspruch 1 oder 2, **dadurch gekennzeichnet, dass** die Oberflächenstruktur eine Vielzahl von Vertiefungen aufweist, die eine Tiefe im Bereich von 3 bis 13 µm aufweisen.

4. Flachprodukt nach einem der Ansprüche 1 bis 3, **dadurch gekennzeichnet, dass** die Vertiefungen zueinander in Form eines sich wiederholenden Musters angeordnet sind.

5. Flachprodukt nach einem der Ansprüche 1 bis 4, **dadurch gekennzeichnet, dass** die I-förmigen Vertiefungen derart angeordnet sind, dass sie eine Vielzahl von Paaren definieren, die jeweils aus parallel zueinander verlaufenden I-förmigen Vertiefungen bestehen.

6. Flachprodukt nach Anspruch 1 oder 5, **dadurch gekennzeichnet, dass** die aus parallel zueinander verlaufenden I-förmigen Vertiefungen bestehenden Paare oder die H-förmigen Vertiefungen zueinander in Form eines Schachbrettmusters angeordnet sind.

7. Flachprodukt nach einem der Ansprüche 1 bis 6, **dadurch gekennzeichnet, dass** es ein Stahlblech oder -band ist.

8. Flachprodukt nach einem der Ansprüche 1 bis 7, **dadurch gekennzeichnet, dass** das Stahlblech oder -band mit einem Korrosionsschutzüberzug versehen ist.

9. Flachprodukt nach einem der Ansprüche 1 bis 8, **dadurch gekennzeichnet, dass** der Korrosionsschutzüberzug ein auf Zink basierender Überzug ist.

10. Verwendung eines gemäß einem der Ansprüche 1 bis 9 ausgebildeten Flachprodukts für die Herstellung von Bauteilen, die mit einer Lackschicht beschichtet werden.

11. Walze zur Herstellung von gemäß einem der Ansprüche 1 bis 9 ausgebildeten Flachprodukten, deren Walzenoberfläche eine deterministische Oberflächenstruktur aufweist, **dadurch gekennzeichnet, dass** die Oberflächenstruktur eine Vielzahl von sich überlappenden Näpfchen aufweist, die so angeordnet sind, dass sie eine doppel-I-förmige, H-förmige, kreuzförmige, C-förmige oder X-förmige Materialstrukturen in der Walzenoberfläche begrenzen, und dass die Oberflächenstruktur der Walze gemessen in Walzachsrichtung eine Spitzenzahl RPc im Bereich von 80 bis 180 1/cm, eine arithmetische Mittenrauheit Ra im Bereich von 2,5 bis 3,5 µm und eine arithmetische Mittenwelligkeit Wsa im Bereich von 0,08 bis 1,0 µm aufweist.

12. Walze nach Anspruch 11, **dadurch gekennzeichnet, dass** deren Oberflächenstruktur eine Vielzahl von sich überlappenden Näpfchen aufweist, wobei das jeweilige Näpfchen ein im Wesentlichen gaußförmiges Profil oder Top-Hat-Profil aufweist.

13. Walze nach Anspruch 11 oder 12, **dadurch gekennzeichnet, dass** die doppel-I-förmigen oder H-förmigen Materialstrukturen zueinander in Form eines Schachbrettmusters angeordnet sind.

14. Walze nach Anspruch 12, **dadurch gekennzeichnet, dass** die sich überlappenden Näpfchen so angeordnet sind, dass sie I-förmige Materialstrukturen in der Walzenoberfläche begrenzen, wobei die strichförmigen Materialstrukturen zueinander in Form eines Fischgrätmusters angeordnet sind.

15. Walze nach Anspruch 11 bis 14, **dadurch gekennzeichnet, dass** die Näpfchen eine Tiefe im Bereich von 6 oder 14 µm, vorzugsweise im Bereich von 8 bis 13 µm aufweisen.

16. Walze nach einem der Ansprüche 11 bis 15, **dadurch gekennzeichnet, dass** die Näpfchen einen mittleren Durchmesser im Bereich von 20 bis 80 µm, vorzugsweise im Bereich von 20 bis 40 µm, besonders bevorzugt im Bereich von 22 bis 35 µm aufweisen.

17. Verfahren zur Herstellung eines gemäß einem der Ansprüche 1 bis 9 ausgebildeten Flachprodukts, bei dem ein aus einem Metallwerkstoff bestehendes Flachprodukt zur Verfügung gestellt wird, bei dem zumindest die mit der gemäß einem der Ansprüche 1 bis 6 definierten Oberflächenstruktur zu versehene Oberfläche eine arithmetische Mittenrauheit Ra von max. 3,0 µm aufweist, und das zur Verfügung gestellte Flachprodukt einer Dressierwalzung unterzogen wird, bei der eine gemäß einem der Ansprüche 11 bis 16 beschaffene Walze auf die mit der Oberflächenstruktur gemäß einem der Ansprüche 1 bis 6 zu versehende Oberfläche wirkt, so dass ein Flachprodukt mit der in einem der Ansprüche 1 bis 6 definierten Oberflächenstruktur erhalten wird.

## Claims

1. Flat product made of a metal material, more particularly a steel material, having a deterministic surface texture, the surface texture having a plurality of depressions which have a depth in the range of from 2 to 14 µm, **characterised in that** the depressions are designed to be I-shaped, H-shaped, cross-shaped, C-shaped or X-shaped, the surface texture having a peak count RPc in the range of from 45 to 180 1/cm, an arithmetic mean roughness Ra in the range of from 0.3 to 3.6 µm and an arithmetic mean waviness Wsa in the range of from 0.05 to 0.65 µm.

2. Flat product according to claim 1, **characterised in that** the arithmetic mean roughness Ra of the surface texture lies in the range of from 1.0 to 2.5 µm, preferably in the range of from 1.0 to 2.0 µm, more preferably in the range of from 1.0 to 1.6 µm.

3. Flat product according to either claim 1 or claim 2, **characterised in that** the surface texture has a plurality of depressions which have a depth in the range of from 3 to 13 µm.

4. Flat product according to any of claims 1 to 3, **characterised in that** the depressions are arranged relative to one another in a repeating pattern.

5. Flat product according to any of claims 1 to 4, **characterised in that** the I-shaped depressions are arranged such that they define a plurality of pairs which each consist of I-shaped depressions which extend parallel to one another.

6. Flat product according to either claim 1 or claim 5, **characterised in that** the pairs consisting of I-shaped depressions extending parallel to one another or the H-shaped depressions are arranged relative to one another in a chessboard pattern.

7. Flat product according to any of claims 1 to 6, **characterised in that** said product is a steel sheet or strip.

8. Flat product according to any of claims 1 to 7, **characterised in that** the steel sheet or strip is provided with an anti-corrosion coating.

9. Flat product according to any of claims 1 to 8, **characterised in that** the anti-corrosion coating is a zinc-based coating.

10. Use of a flat product formed according to any of claims 1 to 9 for producing components which are coated with a paint layer.

11. Roller for producing flat products formed according to any of claims 1 to 9, the roller surface of which has a deterministic surface texture, **characterised in that** the surface texture has a plurality of overlapping dimples, which are arranged such that they delimit a double-I-shaped, H-shaped, cross-shaped, C-shaped or X-shaped material texture in the roller surface, and **in that** the surface texture of the roller measured in the direction of the roller axis has a peak count RPc in the range of from 80 to 180 1/cm, an arithmetic mean roughness Ra in the range of from 2.5 to 3.5 µm and an arithmetic mean waviness Wsa in the range of from 0.08 to 1.0 µm.

12. Roller according to claim 11, **characterised in that** the surface texture thereof has a plurality of overlapping dimples, each dimple having a substantially Gaussian profile or top-hat profile.

13. Roller according to either claim 11 or claim 12, **characterised in that** the double-I-shaped or H-shaped material textures are arranged relative to one another in a chessboard pattern.

14. Roller according to claim 12, **characterised in that** the overlapping dimples are arranged such that they delimit I-shaped material textures in the roller surface, the line-shaped material textures being arranged relative to one another in a herringbone pattern.

15. Roller according to claims 11 to 14, **characterised in that** the dimples have a depth in the range of 6 or 14 µm, preferably in the range of from 8 to 13 µm.

16. Roller according to any of claims 11 to 15, **characterised in that** the dimples have an average diameter in the range of from 20 to 80 µm, preferably in the range of from 20 to 40 µm, more preferably in the range of from 22 to 35 µm.

17. Method for producing a flat product formed according to any of claims 1 to 9, wherein a flat product consisting of a metal material is provided, wherein at least the surface to be provided with the surface texture defined according to any of claims 1 to 6 has an arithmetic mean roughness Ra of at most 3.0 µm, and the flat product provided is subjected to skin-pass rolling, wherein a roller created according to any of claims 11 to 16 acts on the surface to be provided with the surface texture according to any of claims 1 to 6 so that a flat product having the surface texture defined in any of claims 1 to 6 is obtained.

## Revendications

1. Produit plat constitué d'un matériau métallique, en particulier d'un matériau acier, qui est doté d'une structure de surface déterminante, sachant que la structure de surface est pourvue de nombreuses cavités qui présentent une profondeur située dans une plage de 2 à 14 µm, **caractérisé en ce que** les cavités sont réalisées en forme de I, en forme de H, en forme de croix, en forme de C ou en forme de X, la structure de surface présentant une densité de pic RPc située dans une plage de 45 à 180 1/cm, une rugosité arithmétique moyenne Ra située dans une plage de 0,3 à 3,6 µm et une ondulation arithmétique moyenne Wsa située dans une plage de 0,05 à 0,65 µm.

2. Produit plat selon la revendication 1, **caractérisé en ce que** la rugosité arithmétique moyenne Ra de la structure de surface est située dans une plage de 1,0 à 2,5 µm, de préférence dans une plage de 1,0 à 2,0 µm, particulièrement de préférence dans une plage de 1,0 à 1,6 µm.

3. Produit plat selon revendication 1 ou 2, **caractérisé en ce que** la structure de surface est pourvue de nombreuses cavités qui présentent une profondeur située dans une plage de 3 à 13 µm.

4. Produit plat selon l'une des revendications 1 à 3, **caractérisé en ce que** les cavités sont disposées sous la forme d'un motif répété.

5. Produit plat selon l'une des revendications 1 à 4, **caractérisé en ce que** les cavités en forme de I sont disposées de sorte à définir de nombreux couples qui consistent chacun en cavités en forme de I qui s'étendent parallèlement les unes par rapport aux autres.

6. Produit plat selon revendication 1 ou 5, **caractérisé en ce que** les couples composés de cavités en forme de I, qui s'étendant parallèlement l'une par rapport à l'autre, ou les cavités en forme de H sont disposés / disposées en motif d'échiquier les uns / les unes par rapport aux autres.

7. Produit plat selon l'une des revendications 1 à 6, **caractérisé en ce que** celui-ci est une tôle d'acier ou une bande d'acier.

8. Produit plat selon l'une des revendications 1 à 7, **caractérisé en ce que** la tôle d'acier ou la bande d'acier est pourvue d'un revêtement de protection contre la corrosion.

9. Produit plat selon l'une des revendications 1 à 8, **caractérisé en ce que** le revêtement de protection contre la corrosion est un revêtement à base de zinc.

10. Utilisation d'un produit plat, formé selon l'une des revendications 1 à 9, pour la fabrication de composants devant être revêtus d'une couche de laque.

11. Cylindre pour la fabrication de produits plats, formés selon l'une des revendications 1 à 9, dont la surface est dotée d'une structure de surface déterminante, **caractérisé en ce que** le structure de surface est dotée de nombreux petits godets qui, se chevauchant, sont disposés de manière à délimiter, dans la surface du cylindre, des structures de matériau en forme de double I, en forme de H, en forme de croix, en forme de C ou en forme de X, et que la structure de surface du cylindre présente, dans la direction de l'axe du cylindre, une densité de pic RPc située dans une plage de 80 à 180 1/cm, une rugosité arithmétique moyenne Ra située dans une plage de 2,5 à 3,5 µm et une ondulation arithmétique moyenne Wsa située dans une plage de 0,08 à 1,0 µm.

12. Cylindre selon la revendication 11, **caractérisé en ce que** sa structure de surface est pourvue de nombreux petits godets qui se chevauchent, sachant que chaque petit godet est doté d'un profil essentiellement gaussien ou Top-Hat.

13. Cylindre selon revendication 11 ou 12, **caractérisé en ce que** les structures de matériau en forme de double I ou en forme de H sont disposées en motif d'échiquier les unes par rapport aux autres.

14. Cylindre selon la revendication 12, **caractérisé en ce que** les petits godets, qui se chevauchent, sont disposés de manière à délimiter, dans la surface du cylindre, des structures de matériau en forme de double I, sachant que les structures de matériau en forme de traits sont disposés en chevrons.

15. Cylindre selon l'une des revendications 11 à 14, **caractérisé en ce que** les petits godets sont dotés d'une profondeur située dans une plage de 6 à 14 µm, de préférence dans une plage de 8 à 13 µm.

16. Cylindre selon l'une des revendications 11 à 15, **caractérisé en ce que** les petits godets sont dotés d'un diamètre moyen situé dans une plage de 20 à 80 µm, de préférence dans une plage de 20 à 40 µm, particulièrement de préférence dans une plage de 22 à 35 µm.

17. Procédé de fabrication d'un produit plat selon l'une des revendications 1 à 9, dans lequel un produit plat constitué d'un matériau métallique est mis à disposition, dans lequel au moins la surface à pourvoir de la structure de surface, définie selon les revendications 1 à 6, présente une rugosité arithmétique moyenne Ra de 3,0 µm au maximum, et le produit plat, mis à disposition, est soumis à un laminage de dressage, dans lequel un cylindre, constitué selon les revendications 11 à 16, agit sur la surface à pourvoir de la structure de surface selon les revendications 1 à 6, de sorte à obtenir un produit plat, doté de la structure de surface définie dans les revendications 1 à 6.
